Europäisches Patentamt

European Patent Office

Office européen des brevets

(11) Veröffentlichungsnummer: **0 448 789 A2**

# (12) EUROPÄISCHE PATENTANMELDUNG

(21) Anmeldenummer: 90122479.0

(22) Anmeldetag: 26.11.90

(51) Int. Cl.⁵: **H04Q 7/04**, H04B 7/26

(30) Priorität: 24.03.90 DE 4009578

(43) Veröffentlichungstag der Anmeldung:
02.10.91 Patentblatt 91/40

(84) Benannte Vertragsstaaten:
BE CH DE DK FR GB LI NL SE

(71) Anmelder: **ROBERT BOSCH GmbH**
**Postfach 10 60 50**
**W-7000 Stuttgart 10(DE)**

(72) Erfinder: **Dähnrich, Bernhard, Dipl.-Ing.**
**Ulmenstrasse 8 a**
**W-1000 Berlin 28(DE)**
Erfinder: **Rosenegger, Wolfgang**
**Borstellstrasse 14**
**W-1000 Berlin 41(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**W-1000 Berlin 33(DE)**

(54) **Funkanlage.**

(57)
2.1 Mit der Erfindung soll eine Funkanlage geschaffen werden, bei der der für den Verbindungsaufbau verwendete Organisationskanal entlastet wird.

2.2 Diese Aufgabe wird dadurch gelöst, daß vor jeder vorübergehenden Stillegung des Funkgerätes automatisch ein Abmeldetelegramm ausgesendet wird. Das Abmeldetelegramm enthält ein individuelles Kennzeichen des Funkgerätes. Eine Verwaltungseinheit empfängt das Abmeldetelegramm und speichert es in einem Verwaltungsrechner. Bevor dann ein für das abgemeldete Funkgerät bestimmter Ruf von der Verwaltungseinheit ausgesendet wird, erfolgt ein Vergleich des Rufkennzeichens mit den im Verwaltungsrechner gespeicherten Kennzeichen. Wird eine Übereinstimmung zweier Kennzeichen festgestellt, so unterbleibt die Aussendung des Rufes. Bei einem späteren Wiedereinschalten des Funkgerätes wird automatisch ein Anmeldetelegramm ausgesendet, das von der Verwaltungseinheit empfangen wird. Gleicht das in dem Anmeldetelegramm enthaltene individuelle Kennzeichen einem der in dem Verwaltungsrechner gespeicherten individuellen Kennzeichen, so wird das gespeicherte Kennzeichen gelöscht.

2.3 Ein bevorzugtes Anwendungsgebiet für die Erfindung sind Bündelfunknetze.

EP 0 448 789 A2

Die Erfindung geht von einer Funkanlage nach dem Oberbegriff des Anspruchs 1 aus.

## Stand der Technik

Es sind derartige Funkanlagen bekannt (Funkschau, 1989, Heft 17, Seiten 34 bis 38), bei denen alle Verbindungen auf einem besonderen Organisationskanal aufgebaut werden. In Spitzenbelastungszeiten, in denen viele Funkteilnehmer über den Organisationskanal gerufen werden müssen, kann es dann leicht zu einer Überlastung dieses Kanals kommen.

## Aufgabe

Der Erfindung liegt die Aufgabe zugrunde, eine Funkanlage gemäß dem Oberbegriff des Anspruchs 1 derart weiterzubilden, daß der Organisationskanal entlastet wird.

## Lösung

Diese Aufgabe wird bei einer Funkanlage gemäß dem Oberbegriff des Anspruchs 1 durch die im kennzeichnenden Teil dieses Anspruchs aufgeführten Maßnahmen gelöst. Die mit der Erfindung erzielten Vorteile bestehen insbesondere darin, daß der Organisationskanal spürbar entlastet wird, weil alle Rufe an nicht empfangsbereite Funkgeräte der Funkanlage unterbleiben.

Ein bevorzugtes Anwendungsgebiet für die erfindungsgemäße Funkanlage sind Bündelfunknetze.

## Beschreibung der Erfindung

Zu einer Funkanlage gehören ein oder mehrere Verwaltungseinheiten mit Verwaltungsrechnern und eine Vielzahl von Funkgeräten, das sind vorzugsweise mobile Funkgeräte. Der Verbindungsaufbau zu den Funkgeräten erfolgt über einen gemeinsamen Organisationskanal. Jedes zu einer Funkanlage gehörende Funkgerät wird, wenn es zeitweise stillgelegt werden soll bzw. wenn es nicht empfangsbereit sein soll, abgeschaltet. Durch die Betätigung des das Funkgerät abschaltenden Schalters wird ein Abmeldetelegramm ausgelöst, das über den Organisationskanal zu der Verwaltungseinheit gesendet wird. Das Abmeldetelegramm enthält ein dem betreffenden Funkgerät zugeordnetes individuelles Kennzeichen. Das Abmeldetelegramm wird von der Verwaltungseinheit, in deren Funkbereich sich das Funkgerät gerade aufhält, empfangen. In einem zu der Verwaltungseinheit gehörenden Verwaltungsrechner wird das empfangene Abmeldetelegramm oder ein davon abgeleitetes, das individuelle Kennzeichen enthaltendes Signal gespeichert.

Jedesmal, wenn die Verwaltungseinheit über einen Organisationskanal einen Ruf an einen Funkempfänger weiterleiten will, der sich abgemeldet hat, findet im Verwaltungsrechner eine Prüfung statt, ob der auszusendende Ruf mit einem der gespeicherten Kennzeichen übereinstimmt. Ist dies der Fall, dann wird die Aussendung des Rufes durch die Verwaltungseinheit unterbunden, so daß der Organisationskanal für diesen Ruf nicht belegt wird.

Wird das abgemeldete Funkgerät nach einiger Zeit wieder eingeschaltet, so wird dadurch automatisch ein Anmeldetelegramm ausgesendet, das ebenfalls das individuelle Kennzeichen des Funkgerätes enthält. Das von der Verwaltungseinheit empfangene Anmeldetelegramm bzw. das darin enthaltene individuelle Kennzeichen wird in dem Verwaltungsrechner mit den darin gespeicherten individuellen Kennzeichen verglichen. Wird eine Übereinstimmung von empfangenem Kennzeichen und gespeichertem Kennzeichen festgestellt, dann wird das gespeicherte Abmeldetelegramm bzw. das entsprechende Kennzeichen in dem Verwaltungsrechner gelöscht. Das angemeldete Funkgerät kann dann wieder in der üblichen Weise von der Verwaltungseinheit gerufen werden.

Hat sich ein empfangsbereites Funkgerät mit einem Anmeldetelegramm bei der Verwaltungseinheit angemeldet, so kann davon ausgegangen werden, daß für die Anrufbereitschaft eines gerufenen Funkgerätes kein Quittungsaustausch erforderlich ist.

In dem vorstehend erläuterten Ausführungsbeispiel werden Abmeldetelegramme und Anmeldetelegramme durch eine Schalterbetätigung am Funkgerät ausgelöst. Enthalten die Funkgeräte einen Kartenleser zum Auswerten von Berechtigungskarten, so kann anstelle des von einem Funkteilnehmer zu betätigenden Schalters das Herausziehen oder Hineinstecken der Berechtigungskarte in den Kartenleser eine Auslösung des Abmeldetelegramms bzw. des Anmeldetelegramms bewirken. In analoger Weise kann auch ein Kodierstecker, der als Berechtigungsnachweis dient, die Schalterfunktion übernehmen.

## Patentansprüche

1. Funkanlage, bei der der Verbindungsaufbau von einer Verwaltungseinheit zu einem zu dem Funkbereich dieser Verwaltungseinheit gehörenden Funkgerät über einen Organisationskanal erfolgt, **dadurch gekennzeichnet**, daß jedes Funkgerät, das vorübergehend stillgelegt wird, beim Stillegen automatisch ein das betreffende Funkgerät kennzeichnendes Abmeldetelegramm mit einem dem Funkgerät zugeordneten individuellen Kennzeichen an die jeweilige Verwaltungseinheit sendet, daß jedes in der Verwaltungseinheit empfangene Abmeldetelegramm in einem Verwaltungsrechner der Verwaltungseinheit gespeichert wird, daß die Kennzeichen der gespeicherten Abmeldetelegramme mit jedem von der Verwaltungseinheit auszusendenden Rufkennzeichen verglichen werden, daß bei einer festgestellten Übereinstimmung das betreffende Rufkennzeichen nicht ausgesendet wird, daß mit dem Wiederinbetriebnehmen des Funkgerätes automatisch ein Anmeldetelegramm mit dem dem Funkgerät zugeordneten individuellen Kennzeichen über den Organisationskanal an die Verwaltungseinheit ausgesendet wird, daß das individuelle Kennzeichen des Anmeldetelegramms mit den in dem Verwaltungsrechner gespeicherten individuellen Kennzeichen verglichen wird und daß bei Übereinstimmung zweier Kennzeichen das im Verwaltungsrechner gespeicherte Kennzeichen gelöscht wird.

2.  Funkanlage nach Anspruch 1, dadurch gekennzeichnet, daß das Abmeldetelegramm durch die Betätigung eines das Funkgerät ausschaltenden Schalters und das Anmeldetelegramm durch Betätigung eines das Funkgerät einschaltenden Schalters ausgelöst wird.

3.  Funkanlage nach Anspruch 1, dadurch gekennzeichnet, daß das Aussenden des Abmeldetelegramms durch Herausziehen eines Berechtigungsnachweismittels aus dem Funkgerät und daß die Aussendung des Anmeldetelegramms durch Hineinstecken des Berechtigungsnachweismittels in das Funkgerät ausgelöst wird.